# EUROPÄISCHE PATENTSCHRIFT

(11) **EP 1 152 864 B1**
(45) Veröffentlichungstag und Bekanntmachung des Hinweises auf die Patenterteilung: **02.05.2003**
(21) Anmeldenummer: 99964557.5
(22) Anmeldetag: 11.12.1999
(51) Int. Cl.: B23K 35/02, B23K 1/20

(54) **VERFAHREN ZUR PARTIELLEN ODER VOLLSTÄNDIGEN BESCHICHTUNG DER OBERFLÄCHEN VON BAUTEILEN AUS ALUMINIUM UND SEINEN LEGIERUNGEN MIT LOT, FLUSS- UND BINDEMITTEL ZUR HARTVERLÖTUNG**
METHOD FOR PARTIALLY OR COMPLETELY COATING THE SURFACES OF COMPONENTS PRODUCED FROM ALUMINUM OR ITS ALLOYS WITH SOLDERS, FLUXING AGENTS OR BINDERS FOR BRAZING
PROCEDE POUR RECOUVRIR PARTIELLEMENT OU ENTIEREMENT LES SURFACES D'ELEMENTS EN ALUMINIUM ET EN ALLIAGES D'ALUMINIUM AVEC DU PLOMB, DU FONDANT ET UN LIANT POUR BRASAGE FORT

(30) Priorität: 23.12.1998 DE 19859735
(43) Veröffentlichungstag der Anmeldung: 14.11.2001
(73) Patentinhaber: Erbslöh Aktiengesellschaft, 42553 Velbert (DE)
(72) Erfinder: SUCKE, Norbert-William, D-47269 Duisburg (DE)
(74) Vertreter: Mentzel, Norbert, Dipl.-Phys.
(86) Internationale Anmeldenummer: EP9909835
(87) Internationale Veröffentlichungsnummer: WO00038874

(56) Entgegenhaltungen:
- EP-A- 0 563 750
- DE-A- 19 744 734
- FR-A- 2 479 055
- FR-A- 2 496 518

## Beschreibung

Die Erfindung betrifft ein Verfahren zur partiellen oder vollständigen Beschichtung der Oberflächen von Bauteilen aus Aluminium und seinen Legierungen mit Lot, Fluß- und Bindemittel zur Hartverlötung der Bauteile miteinander, indem bei hoher Geschwindigkeit auf die für die Lötung vorgesehenen Oberflächen Lot, Fluß- und Bindemittel aufgetragen werden, zu deren Aufschmelzung Wärme benutzt wird.

Die deutsche Patentanmeldung DE 197 44 734 A beschreibt ein Verfahren der eingangs genannten Art, bei dem das Lot und das Flußmittel zur gleichmäßig dosierten Beschichtung der Oberfläche von Metallbauteilen pulverförmig mit hoher Geschwindigkeit aufgetragen wird, während das Bindemittel in flüssiger, zumindest aber pastöser Form limitiert auf die Oberfläche der Metallbauteile aufgebracht wird. Bei dieser bekannten Lösung wird eine gut haftende Beschichtung erzielt, die weitere Bearbeitungsschritte ermöglicht. Wirtschaftlichkeitsgründe sind Anlaß, eine hohe Beschichtungsgeschwindigkeit anzustreben, wodurch eine Integration in bestehende Verfahrensabläufe ermöglicht wird. Jedoch erfordert auch der limitierte Bindemittelauftrag zur ausreichenden Haftung des pulverförmigen Flußmittels und Lotes eine verhältnismäßig große Menge Bindemittel, bezogen auf eine Flächeneinheit, und außerdem fallen Lösungsmittelemissionen des Bindemittels sowie Abfälle an, mit denen Entsorgungskosten einhergehen.

Das Dokument FR-A-2479055 offenbart eine Beschichtung aus pulverförmigen Flußmittel und pulverförmigen Bindemittel. Hier sind keine Größenangaben der Bindemittelpartikel und der Schichtdicke angegeben. Diese Beschichtung enthält kein Lotmittel. Aus dem Dokument FR-A-2496518 ist desweiteren eine Beschichtung aus pulverförmigen Lotmittel und pulverförmigen Flußmittel bekannt. In diesem Fall enthält die Beschichtung kein pulverförmiges Bindemittel. Für dünnwandige Wärmetauscherprofile ist aber gerade der gleichmäßige Auftrag von allen drei Komponenten wichtig. Bei stärkeren Konzentrationsunterschieden in der Schicht kommt es im Lötprozeß dazu, daß nur kleine Inselchen aufschmelzen bzw. es erfolgt andererseits ein stellenweises Durchlegieren.

Hier setzt nun die Erfindung an, deren Aufgabe es ist, das eingangs genannte Verfahren dahingehend zu verbessern, daß zur Erzielung eines guten Lötergebnisses bei möglichst gleichmäßiger Beschichtung die Lot, Fluß- und Bindemittel enthaltende Auftragsschicht mit den geringstmöglichen Mengen dieser Stoffe hergestellt werden kann. Diese Aufgabe ist erfindungsgemäß dadurch gelöst, daß außer dem pulverförmigen Lot und Flußmittel auch das Bindemittel in pulverförmiger Form aufgetragen wird. Dieses Auftragen von Lot, Fluß- und Bindemittel auf die Oberfläche der Bauteile aus Aluminium und seinen Legierungen erfolgt vorteilhaft als elektrostatische Pulverbeschichtung. Dazu lassen sich vorzugsweise zwei Verfahren anwenden, wobei zum einen die triboelektrische Aufladbarkeit der pulverförmigen Komponenten oder zum anderen die ionenarme Korona-Aufladung der pulverförmigen Komponenten genutzt wird. Diese pulverförmigen Komponenten von Lot, Fluß- und Bindemittel in Pulverform lassen sich als Einzelkomponenten mittels einer Pistole auf die Oberfläche eines Bauteiles auftragen. Der Auftrag mittels einer Pistole von Lot, Flußund Bindemittel läßt sich auch dann durchführen, wenn diese Stoffe zuvor in ein Co-Extrudat überführt werden und somit ein pulverförmiges Gemisch aus Lot, Fluß- und Bindemittel bilden. Dabei läßt sich das Co-Extrudat in besonders umweltschonender und wirtschaftlicher Weise in einer elektrostatischen Wirbelkammer oder auch einem Wirbelbett auftragen.

Der Auftrag in einer elektrostatischen Wirbelkammer oder einem Wirbelbett läßt sich auch mit pulverförmigem Lot, Fluß- und Bindemittel durchführen, wenn diese Stoffe als Einzelkomponenten in pulverförmiger Form vorliegen. Eine weitere Möglichkeit des Auftrages in einer elektrostatischen Wirbelkammer oder einem Wirbelbett besteht auch darin, das pulverförmige Lot, Fluß- und Bindemittel in Form eines Pulvergemenges aufzutragen.

Außer den vorgenannten Auftragsformen eignet sich auch eine Magnetbürste dazu, das Lot, Fluß- und Bindemittel in Form eines Co-Extrudates auf die Oberfläche eines Bauteiles aus Aluminium und seinen Legierungen aufzutragen.

Die vorgenannten Verfahrensmöglichkeiten der Pulverbeschichtung mittels Pistole, Wirbelkammer oder Magnetbürste erlauben Beschichtungsgeschwindigkeiten bis zu 180 m/min. Des weiteren bieten die Beschichtungsvarianten mittels elektrostatischer Wirbelkammer oder Magnetbürste den Vorteil einer besonders gleichmäßigen Beschichtung, während bei der Verwendung von Pistolen ein leichtes Pulsieren des Pulverstromes auftreten kann.

Dabei ist es auch möglich, daß außer den drei vorgenannten Komponenten in Form von Lot, Fluß- und Bindemittel auch Funktionszusätze für den Verschleißschutz oder den Korrosionsschutz beigegeben werden, die ebenfalls in pulverförmiger Form aufgetragen werden können. Als Funktionssätze kommen für den Verschleißschutz beispielsweise Karbide und für den Korrosionsschutz, beispielsweise Zink, infrage.

Zur Bildung einer einheitlichen Schicht aus Lot, Fluß- und Bindemittel ist der pulverförmige Auftrag auf der Oberfläche des Bauteiles einer Wärmeeinwirkung auszusetzen, deren Temperatur im Bereich von 80° C bis etwa 350° C angesiedelt sein kann. Dies läßt sich beispielsweise erzielen, indem als Wärme zur Aufschmelzung der auf dem Bauteil aufzutragenden Schicht aus Lot, Fluß- und Bindemittel die durch den Strangpreßvorgang erzeugte Prozeßwärme im Bauteil bei einem sich unmittelbar an den Strangpreßvorgang anschließenden Auftragsvorgang genutzt wird. Wenn allerdings vor der Pulverbeschichtung des Bauteiles dieses selbst erkaltet ist, ist die Wärme vorteilhaft dem Bauteil zur Aufschmelzung der pulverförmig aufgetragenen Schicht aus Lot, Fluß- und Bindemittel unmittelbar vor oder auch nach der Pulverbeschichtung zuzuführen.

Zur Nachbehandlung im Hinblick auf eine Oberflächenversiegelung und gegebenfalls auch Glättung der aufgeschmolzenen Schicht aus Lot, Flußund Bindemittel läßt sich in einem weiteren Verfahrensvorgang dieser Schicht Wärme zuführen. Dies kann durch Wärmestrahlung geschehen oder aber auch im Falle einer zusätzlichen Glättung durch beheizte Rollen, die gegen die Oberfläche des beschichteten Bauteiles gedrückt werden. Gegebenenfalls läßt sich im Rahmen der Nachbehandlung auch ein Trennmittel auf die versiegelte Schicht auftragen, um bei einer späteren Weiterverarbeitung, beispielsweise durch Aufspulen dünnwandiger Bauteile, ein Verkleben zu verhindern. Als Trennmittel kann beispielsweise Öl Verwendung finden. Zur Regelung des Pulverauftrages hinsichtlich der zu bildenden Schichtdicke und deren Konsistenz sowie zur Steuerung der Wärmezufuhr durchläuft die nachbehandelte, aufgeschmolzene Schicht aus Lot, Fluß- und Bindemittel vorzugsweise eine Meßstation, die Daten in einen Regelkreis zur Steuerung des Beschichtungsvorganges eingibt.

Nach der Meßstation durchläuft das beschichtete Bauteil vorteilhaft eine Kühleinrichtung, mit welcher diese beschichteten Bauteile auf eine zur Weiterverarbeitung durch beispielsweise Trennen, Richten, Aufspulen, deren Lagerung od.dgl. geeignete Temperatur gebracht werden können.

Zur Hartverlötung genügt insbesondere der Auftrag einer sehr dünnen Schicht aus Lotpulver, Flußmittelpulver und Binderpulver auf die Bauteiloberfläche, wobei die Schichtdicke kleiner als 30 µm, vorzugsweise 15 um. Dazu genügt es, eine solche Menge von Binderpulver zur Hartverlötung auf die Bauteiloberfläche aufzutragen, die 3 bis 10 g/m², vorzugsweise jedoch 4 g/m² beträgt.

Als Reaktionsgemisch zur Durchführung des Verfahrens eignet sich jeweils in Pulverform vorliegendes Lot, Fluß- und Bindemittel. Die Pulverteilchen liegen immer in einer Verteilung vor. Es können Pulverteilchen der Größe 3 bis 50 µm in der Verteilung vorhanden sein. Der Verteilungsmittelwert der Pulverteilchengröße sollte bei 3 bis 30 µm liegen, vorzugsweise bei 10 bis 15 µm. Als pulverförmiges Bindemittel wird vorteilhaft feinkörniger organischer Binder - im weiteren Klarlackpulver genannt - eingesetzt, während als Lotpulver ein aluminiumhaltiges Metall-Pulver, insbesondere ein Al-Si-haltiges Metall- oder Legierungspulver Verwendung findet, vorzugsweise Al-Si(7-40)-Legierungspulver. Allerdings läßt sich als Lotpulver auch ein Siliziumpulver oder Zinkpulver einsetzen. Das Flußmittel ist vorteilhaft ein nicht korrosives Flußmittel auf der Basis von Metall-Fluoriden, insbesondere Alkalimetall-Fluoride und/oder Zinkfluorid.

Zur Bildung des pulverförmigen Reaktionsgemisches ist noch das Gewichtsverhältnis von Lotpulver zu Flußmittelpulver bedeutsam. Dabei mag das Gew.-Verhältnis von Lotpulver zu Flußmittelpulver 1:1 bis 1:3 betragen, wobei jedoch vorzugsweise ein Gew.-Verhältnis von 1:1 vorgesehen ist. Des weiteren ist für die Bildung des Reaktionsgemisches auch der Gew%-Anteil an Bindemittel in Form von Klarlackpulver, bezogen auf die Gesamtmenge des Pulvers von Lot, Fluß- und Bindemittel bedeutsam, wobei vorzugsweise als Bindemittel 25 Gew% Klarlackpulver, bezogen auf die Gesamtmenge des Pulvers eingesetzt wird.

Hinsichtlich des zuvor erwähnten Co-Extrudat-Pulvers ist noch zu bemerken, daß die Bildung eines solchen Co-Extrudat-Pulvers aus Lot, Fluß- und Bindemittel insofern günstig ist, als daß keine Entmischung der Komponenten stattfinden kann. Dieses Co-Extrudat-Pulver läßt sich durch Mahlen eines Granulates bilden, welches durch Extrudieren aus einer Mischung von Lot, Fluß- und Bindemittel erhalten wird, wobei die Co-Extrudat-Pulverpartikel eine gleichmäßige Partikelgrößenverteilung besitzen.

Der Vorgang zur Beschichtung der Oberflächen von Bauteilen aus Aluminium und seinen Legierungen ist anhand zweier auf der Zeichnung schematisch nur beispielsweise dargestellten Verfahren nachfolgend näher erläutert. Es zeigen:
- Fig. 1: ein schematisch dargestelltes Verfahren in der Art eines Blockschaltbildes, bei dem die Bauteile vorgewärmt - z.B. aus einer Strangpresse warm austretend - dem Beschichtungsvorgang unterzogen werden,
- Fig. 2: ein Verfahren, bei dem der Beschichtungsvorgang auf die kalten Bauteile aufgetragen wird und diesen nachfolgend Wärme zugeführt ist.

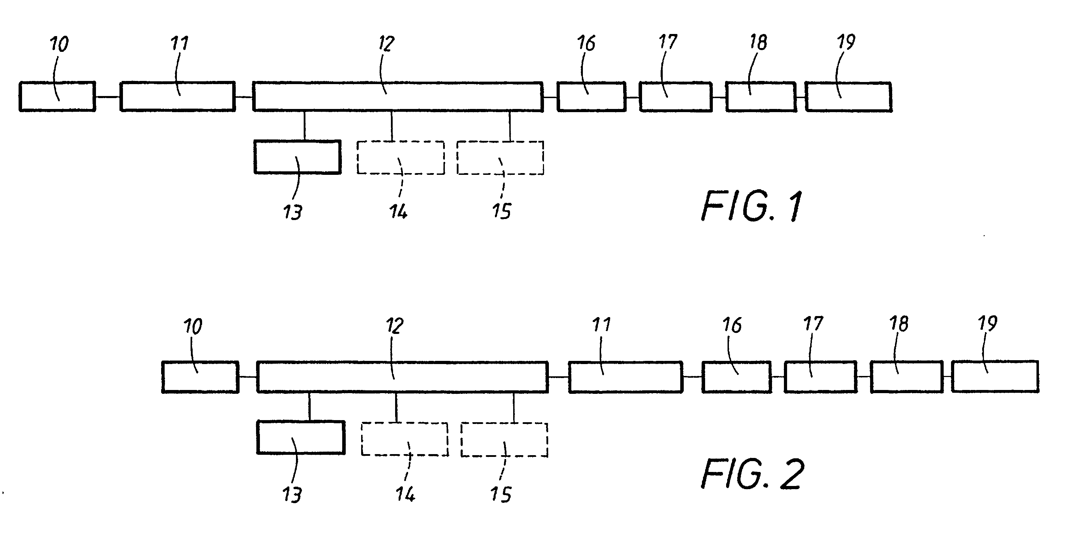

Bei der aus Fig. 1 ersichtlichen Verfahrensweise kommt das als Band, Rohr, Profil od.dgl. anfallende Bauteil 10 aus Aluminium und seinen Legierungen unmittelbar aus einer Strangpresse und wird in einer Wärmestation 11 daraufhin überprüft, ob die vom Bauteil mitgeführte Prozeßwärme ausreicht, um die nachfolgende Pulverbeschichtung aufzuschmelzen. Diese Wärmestation 11 ist geeignet, das Bauteil auf eine Temperatur zu regeln, die größer als 80° C ist. Dabei kann die Wärmestation durch Induktionserwärmung, Brennererwärmung oder Strahlungsheizung betrieben werden. An diese Wärmestation 11 schließt sich eine Pulverbeschichtungsstation 12 zur elektrostatischen Pulverbeschichtung an, die von dem Bauteil 10 durchlaufen wird, und auf dessen Oberfläche Lotpulver, Flußmittelpulver und Bindemittelpulver aufgetragen wird. Diese einzelnen pulverförmigen Substanzen lassen sich als Einzelkomponenten mittels einer Pistole auftragen und können jeweils für sich aus separaten Pulverbehältern 13, 14, 15 entnommen werden. Anstelle der als Einzelkomponenten aufgetragenen pulverförmigen Substanzen von Lot, Fluß- und Bindemittel lassen sich diese Substanzen auch in Form eines Co-Extrudates mittels einer Pistole aus einem einzigen Pulverbehälter 13 auftragen. Die Pulverbeschichtungsstation läßt sich jedoch auch als Wirbelkammer bzw. Wirbelbett ausrüsten, worin das Lot, Fluß- und Bindemittel in Form pulverförmiger Einzelkomponenten oder in Form eines Pulvergemenges oder aber auch in Form eines Co-Extrudates auf die Oberfläche des Bauteiles aufgetragen werden kann. Schließlich ist es aber auch noch möglich, das Lot, Fluß- und Bindemittel in Form eines Co-Extrudates mittels des Magnetbürstenverfahrens in der Pulverbeschichtungsstation 12 aufzutragen. Das nicht abgeschiedene Pulver (Overspray) kann aufgefangen und dem Beschichtungsprozeß wieder zugeführt werden.

In allen Fällen wird eine sehr dünne Schicht aus Lotpulver, Flußmittelpulver und Bindemittelpulver zur Hartverlötung auf die Oberfläche des Bauteiles aufgetragen, wobei die Schichtdicke etwa 15 µm beträgt. Dabei soll der mengenmäßige Anteil an Bindemittelpulver im allgemeinen bei etwa 4 g/m² liegen. Die Größe der Pulverteilchen sowohl des pulverförmigen Lotes, des pulverförmigen Flußmittels und auch des pulverförmigen Bindemittels liegt bei vorzugsweise 10 bis 15 µm. Das Bindemittel pyrolysiert rückstandsarm in Stickstoff (N₂) und Luft.

Als Binderpulver ist bei dem hier beschriebenen Beispiel ein Klarlackpulver eingesetzt, während als Lotpulver ein aluminiumhaltiges Metallpulver, wie beispielsweise Al-Si oder auch nur Si-Pulver verwendet wird. Das Gewichtsverhältnis Lotpulver zu Flußmittelpulver ist bei dem beschriebenen Ausführungsbeispiel auf etwa 50 zu 50 Gew% eingestellt. Bezogen auf die gesamte Pulvermenge von Lot, Flußmittel und Bindemittel wird bei dem vorbeschriebenen Ausführungsbeispiel ein Bindemittel in Form eines Klarlackpulvers mit einem Gewichtsanteil von 25 % eingesetzt.

An die Pulverbeschichtungsstation 12 schließt sich eine Nachbehandlungsstation 16 an, in welcher eine Oberflächenversiegelung der aufgeschmolzenen Pulverschicht durch Wärmestrahlung beheizbarer Rollen, Gleitkufen od.dgl. vorgenommen werden kann. Dabei läßt sich gleichzeitig Trennmittel auftragen, um ein Verkleben der beschichteten Oberflächen im Falle eines Aneinanderliegens dieser Flächen zu verhindern.

An die Nachbehandlungsstation schließt sich eine Meßstation 17 an, mit welcher Schichtdicke und/oder Schichtzusammensetzung ermittelt wird, wobei diese Daten einem Regelkreis zugeführt werden, mit deren Hilfe bei über die Eingriffsgrenzen hinaus abweichende Werte entsprechende Steuerimpulse an die Pulverbeschichtungsstation 12, an die Nachbehandlungsstation 16 und auch an die Wärmestation 11 zur Korrektur des Ist-Wertes abgegeben werden können. Bei geringerem Anspruch an die Gleichmäßigkeit der Beschichtung kann die Beschichtungsanlage auch über eine reine Steuerung betrieben werden. Schließlich folgt auf die Meßstation 17 eine Kühlstation 18, die entweder mittels Wasser und nachfolgender Trocknung oder aber durch Luft des beschichteten Bauteils auf eine zum Transport, zur Weiterverarbeitung oder Lagerung geeignete Temperatur zurückkühlt. Der Kühlstation 18 läßt sich eine Weiterverarbeitungsstation 19 anschließen, in welcher der beispielsweise strangförmige Bauteil getrennt, gerichtet oder auch zu einem Coil aufgewickelt werden kann.

Bei dem aus Fig. 2 ersichtlichen Verfahrensschema liegen die gegebenenfalls stangförmigen Bauteile mit Raumtemperatur vor und werden in diesem Zustand einer Pulverbeschichtungsstation 12 mit entsprechenden Pulverbehältern 13, 14 und 15 zugeführt. Diese Pulverbeschichtungsstation 12 kann in der gleichen Weise betrieben werden, wie dies vorstehend bei dem Verfahrensschema gemäß Fig. 1 beschrieben worden ist. An diese Pulverbeschichtungsstation fügt sich jetzt eine Wärmestation 11 an, die durch Induktionserwärmung oder auch durch einen Brenner betrieben werden kann, und die der Aufschmelzung der Schicht aus Lot, Fluß- und Bindemittel dient. An diese Wärmestation 11 schließen in gleicher Reihenfolge wie bei dem aus Fig. 1 ersichtlichen Ausführungsbeispiel die Nachbehandlungsstation 16, die Meßstation 17, die Kühlstation 18 und schließlich gegebenenfalls auch die Weiterverarbeitungsstation 19 an. In diesen Stationen 16 bis 19 erfolgen die gleichen Behandlungsschritte wie bei der aus Fig. 1 ersichtlichen Verfahrensweise.

Zur Erläuterung sei ein Ausführungsbeispiel angeführt, bei dem vier verschiedene Pulvermischungen jeweils aus den Einzelkomponenten Polyethylen-Klarlackpulver als Binderpulver und Nocolok Sil® als Lot-Flußmittelpulver vorbereitet und jeweils auf ein Aluminium-Wärmetauscherprofil, welches auf 200°C vorgewärmt ist, aufgetragen werden. Zum Aufragen für diese Testreihe wurde eine elektrostatische Auftragspistole verwendet. Für Produktionsverfahren ist die Auftragung mittels Wirbelkammer oder Magnetbürste zu bevorzugen, da bei Verwendung von Pistolen ein leichtes Pulsieren des Pulverstromes das Auftragsergebnis beeinflussen kann.

Die Pulvermischungen unterscheiden sich im Gewichtsanteil an Binderpulver bezogen auf das Gewicht der gesamten Pulvermischung. Es werden Mischungen mit einem Binderanteil von 25 Gew.% bzw. 50 Gew% eingesetzt. Desweiteren unterscheiden sich die Pulvermischungen in der Partikelgrößenverteilung des Binderpulvers. Es werden Polyethylen-Klarlackpulver mit einem Verteilungsmittelwert der Partikelgröße von 36 µm bzw. 12,4 µm verwendet.

Die folgende Tabelle zeigt die ermittelten Ergebnisse.

| Pulvermischung | Partikelgröße D(V,0.5) | Binderanteil in Gew.% | Haftung | Lötpulververteilung |
|---|---|---|---|---|
| 1 | 36 µm | 25% | schlecht | ungleichmäßig |
| 2 | 36 µm | 50% | gut | ungleichmäßig |
| 3 | 12,4 µm | 50% | gut | gleichmäßig |
| 4 | 12,4 µm | 25% | gut | gleichmäßig |

Die Ermittlung der Haftungsergebnisse erfolgte mittels eines Biegetestes. Bei der Verwendung der ersten Pulvermischung platzte die aufgetragene Schicht von dem abgekühlten Wärmetauscherprofil beim Biegen ab. Bei den Pulvermischungen 2 bis 4 war die Haftung gut. Die Lötpulververteilung ist für ein gutes Lötergebnis sehr wichtig. Liegt keine gleichmäßige Verteilung vor, so kann nicht sichergestellt werden, daß an einer späteren Lötstelle ausreichend Lot zum Hartlöten vorhanden ist.

Die Ermittlung der Lötpulververteilung erfolgte visuell. Als ungleichmäßig wurden beschichtete Profile bewertet, wenn die Lotpartikel Inseln bilden und sich zwischen diesen Partikelansammlungen Klarlackzonen ohne Lotpartikel befinden.

Der Tabelle kann weiter entnommen werden, daß Binderanteile von 25 Gew% und 50 Gew% gleich gute Ergebnisse liefern.

Versuche mit Acrylat-Binderpulvern führen zu vergleichbaren Ergebnissen der Lötpulververteilung.

### Bezugszeichenliste:

- 10: Bauteil
- 11: Wärmestation
- 12: Pulverbeschichtungsstation
- 13: Pulverbehälter
- 14: Pulverbehälter
- 15: Pulverbehälter
- 16: Nachbehandlungsstation
- 17: Meßstation
- 18: Kühlstation
- 19: Weiterverarbeitungsstation

## Patentansprüche

1. Verfahren zur partiellen oder vollständigen Beschichtung der Oberflächen von Bauteilen aus Aluminium und seinen Legierungen mit einer gleichmäßigen Schicht aus homogen verteiltem Lot, Fluß- und Bindemittel zur Hartverlötung der Bauteile miteinander,
in dem bei hohen Geschwindigkeiten auf die für die Lötung vorgesehenen Oberflächen Lot, Fluß- und Bindemittel aufgetragen werden, wobei das Lot und Flußmittel in pulverförmiger Form aufgetragen werden und
zur Aufschmelzung dieser Schicht Wärme benutzt wird,
**dadurch gekennzeichnet, daß**
bei hohen Geschwindigkeiten bis zu 180 m/min auf die für die Lötung vorgesehenen Oberflächen Lot, Fluß- und Bindemittel aufgetragen werden und das Bindemittel in pulverförmiger Form zusammen mit dem Lot und Flußmittel mittels elektrostatischer Pulverbeschichtung aufgetragen wird,
wobei die Pulverteilchen in einer Partikelgröße von 5 bis 30 µm, vorzugsweise 10 bis 15 µm, sowie einer engen Partikelgrößenverteilung mit einem Verteilungsmittelwert von 10 bis 15 µm, vorliegen,
wobei der Anteil an Bindemittel bezogen auf die Gesamtmenge an Pulver kleiner 35 Gew% beträgt und
wobei die gleichmäßige Schicht aus homogen verteiltem Lot, Fluß- und Bindemittel eine Schichtdicke kleiner 50 µm, vorzugsweise 15 µm, beträgt.

2. Verfahren nach Anspruch 1, **dadurch gekennzeichnet, daß** zur elektrostatischen Pulverbeschichtung ein Verfahren unter Nutzung der triboelektrischen Aufladbarkeit der pulverförmigen Komponenten angewendet ist.

3. Verfahren nach Anspruch 1, **dadurch gekennzeichnet, daß** zur elektrostatischen Pulverbeschichtung ein Verfahren unter Nutzung der ionenarmen Korona-Aufladung der pulverförmigen Komponenten angewendet wird.

4. Verfahren nach einem der Ansprüche 1 - 3, **dadurch gekennzeichnet, daß** Lot, Fluß- und Bindemittel in Form von Einzelkomponenten mittels einer Pistole aufgetragen werden..

5. Verfahren nach einem der Ansprüche 1 - 3, **dadurch gekennzeichnet, daß** Lot, Fluß- und Bindemittel mittels einer Pistole in Form eines pulverförmigen Co-Extrudates aufgetragen werden, welches gebildet wird durch Herstellung eines Co-Extrusionsproduktes aus der homogenen Mischung von Lot, Fluß- und Bindemittel, anschließendem Granulieren des Coetrusionsproduktes zu einem Granulat und Mahlen des Granulates zu einem pulverförmigen Co-Extrudates.

6. Verfahren nach einem der Ansprüche 1 - 3, **dadurch gekennzeichnet, daß** Lot, Fluß- und Bindemittel in Form pulverförmiger Einzelkomponenten in einer elektrostatischen Wirbelkammer / einem Wirbelbett aufgetragen werden.

7. Verfahren nach einem der Ansprüche 1 - 3, **dadurch gekennzeichnet, daß** Lot, Fluß- und Bindemittel in Form eines Pulvergemenges in einer elektrostatischen Wirbelkammer / einem Wirbelbett aufgetragen werden.

8. Verfahren nach einem der Ansprüche 1 - 3, **dadurch gekennzeichnet, daß** das Lot, Fluß- und Bindemittel mittels einer elektrostatischen Wirbelkammer / einem Wirbelbett in Form eines pulverförmigen Co-Extrudates aufgetragen werden, welches gebildet wird durch Herstellung eines Co-Extrusionsproduktes aus der homogenen Mischung von Lot, Fluß- und Bindemittel, anschließendem Granulieren des Coetrusionsproduktes zu einem Granulat und Mahlen des Granulates zu einem pulverförmigen Co-Extrudates.

9. Verfahren nach einem der Anspruch 1, **dadurch gekennzeichnet, daß** das Lot, Fluß- und Bindemittel mittels einer Magnetbürste in Form eines pulverförmigen Co-Extrudates aufgetragen werden, welches gebildet wird durch Herstellung eines Co-Extrusionsproduktes aus der homogenen Mischung von Lot, Fluß- und Bindemittel, anschließendem Granulieren des Coetrusionsproduktes zu einem Granulat und Mahlen des Granulates zu einem pulverförmigen Co-Extrudates.

10. Verfahren nach Anspruch 1, **dadurch gekennzeichnet, daß** die Wärme dem Bauteil zur Aufschmelzung der aufzutragenden Schicht aus Lot, Fluß- und Bindemittel unmittelbar vor der Pulverbeschichtung zugeführt wird.

11. Verfahren nach Anspruch 10, **dadurch gekennzeichnet, daß** als Wärme zur Aufschmelzung der auf dem Bauteil aufzutragenden Schicht aus Lot, Fluß- und Bindemittel die durch den Strangpreßvorgang erzeugte Wärme im Bauteil bei einem sich unmittelbar an den Strangpreßvorgang anschließenden Auftragsvorgang genutzt wird.

12. Verfahren nach Anspruch 1, **dadurch gekennzeichnet, daß** die Wärme dem Bauteil zur Aufschmelzung der aufgetragenden Schicht aus Lot, Fluß- und Bindemittel unmittelbar nach der Pulverbeschichtung zugeführt wird.

13. Verfahren nach einem der vorhergehenden Ansprüche, **dadurch gekennzeichnet, daß** die aufgeschmolzene Schicht aus Lot, Fluß- und Bindemittel einer Nachbehandlung zur Oberflächenversiegelung und gegebenenfalls Glättung der Schicht unter weiterer Zufuhr von Wärme unterzogen wird.

14. Verfahren nach einem der vorhergehenden Ansprüche, **dadurch gekennzeichnet, daß** das beschichtete Bauteil eine Meßstation durchläuft, deren ermittelte Daten zur Regelung des Pulverauftrages hinsichtlich Schichtdicke, Konsistenz und Wärmezufuhr nutzbar sind.

15. Verfahren nach einem der vorhergehenden Ansprüche, **dadurch gekennzeichnet, daß** eine Kühleinrichtung vorgesehen ist, mit der die beschichteten Bauteile auf eine zur Weiterverarbeitung durch Trennen, Richten, Aufspulen der Bauteile oder zu deren Lagerung geeignete Temperatur gekühlt werden.

16. Verfahren gemäß Anspruch 1, **dadurch gekennzeichnet, daß** eine geringe Menge an Binderpulver zur Hartlötung auf die Bauteiloberfläche aufgetragen wird, insbesondere 3 bis 10 g/m², vorzugsweise 4 g/m².

17. Reaktionsgemisch zur Anwendung im Verfahren gemäß Anspruch 1, umfassend pulverförmiges Lot und pulverförmiges Flußmittel, **dadurch gekennzeichnet, daß** das Reaktionsgemisch auch ein pulverförmiges Bindemittel umfaßt und daß die Pulverteilchengrößen bei 5 bis 30 µm liegen, vorzugsweise 10 bis 15 µm, wobei die Pulverteilchen in einer engen Partikelgrößenverteilung mit einem Verteilungsmittelwert von 3 bis 30 µm, vorzugsweise 10 bis 15 µm, vorliegen und
wobei der Anteil an Bindemittel bezogen auf die Gesamtmenge an Pulver kleiner 35 Gew%, vorzugsweise 25 Gew%, beträgt.

18. Reaktionsgemisch gemäß Anspruch 17, **dadurch gekennzeichnet, daß** als Binderpulver ein organischer Binder verwendet wird.

19. Reaktionsgemisch gemäß Anspruch 17, **dadurch gekennzeichnet, daß** als Flußmittel ein nichtkorrosives Metall-Fluorid-Pulver, insbesondere ein Alkalimetall-Fluorid-Pulver und/oder Zinkfluorid-Pulver verwendet wird.

20. Reaktionsgemisch gemäß Anspruch 17, **dadurch gekennzeichnet, daß** als Lotpulver ein aluminiumhaltiges Metall-Pulver, wie Al-Si haltiges Metall- oder Legierungspulver, vorzugsweise ein übereutektisches Al-Si(13-40)-Legierungspulver verwendet wird.

21. Reaktionsgemisch gemäß Anspruch 17, **dadurch gekennzeichnet, daß** als Lotpulver ein Si-Pulver verwendet wird.

22. Reaktionsgemisch gemäß Anspruch 17, **dadurch gekennzeichnet, daß** als Lotpulver ein Zn-Pulver verwendet wird.

23. Reaktionsgemisch gemäß Anspruch 17, **dadurch gekennzeichnet, daß** ein Gewichts-Verhältnis Lotpulver zu Flußmittelpulver von 1:1 bis 1:3 vorzugsweise 1:1 verwendet wird.

24. Reaktionsgemisch gemäß Anspruch 17, **dadurch gekennzeichnet, daß** zusätzlich zum pulverförmigen Lot, pulverförmigen Flußmittel und pulverförmigen Bindemittel noch Funktionssätze für Verschleißschutz und/oder Korrosionsschutz in pulverförmiger Form verwendet werden.

25. Reaktionsgemisch zur Anwendung im Verfahren gemäß Anspruch 1, **dadurch gekennzeichnet, daß** das Reaktionsgemisch ein Co-Extrudat-Pulver umfaßt, welches durch Mahlen eines Co-Extrudat-Granulates entsteht, welches durch Extrudieren aus einer Mischung von Lot, Flußmittel und Bindemittel erhalten wird, wobei die Co-Extrudat-Pulverartikel in Pulverteilchengrößen von 5 bis 30 µm, vorzugsweise 10 bis 15 µm, und in einer engen Partikelgrößenverteilung mit einem Verteilungsmittelwert von 3 bis 30 µm, vorzugsweise 10 bis 15 µm, vorliegen und
wobei der Anteil an Bindemittel bezogen auf die Gesamtmenge an Pulver kleiner 35 Gew%, vorzugsweise 25 Gew%, beträgt.

## Claims

1. A process for partial or complete coating of surfaces of components of aluminium and the alloys thereof with a uniform layer of homogeneously distributed solder, fluxing agent and binder for brazing of the components to one another,
in which solder, fluxing agent and binder are applied at high speeds onto the surfaces provided for brazing, the solder and fluxing agent being applied in powder form, and
heat being used to melt said layer,
**characterised in that**
solder, fluxing agent and binder are applied at high speeds of up to 180 m/min onto the surfaces provided for brazing and the binder is applied in powder form together with the solder and fluxing agent by means of electrostatic powder coating,
wherein the powder particles are present in a particle size of 5 to 30 µm, preferably 10 to 15 µm, as well as a narrow particle size distribution with an average of the distribution of 10 to 15 µm,
wherein the proportion of binder relative to the total quantity of powder is smaller than 35 wt.% and
wherein the uniform layer of homogeneously distributed solder, fluxing agent and binder has a layer thickness of less than 50 µm, preferably of 15 µm.

2. A process according to claim 1, **characterised in that** for electrostatic powder coating a process is used that utilises the triboelectric chargeability of the powder components.

3. A process according to claim 1, **characterised in that** for electrostatic powder coating a process is used that utilises low-ion corona charging of the powder components.

4. A process according to one of claims 1-3, **characterised in that** the solder, fluxing agent and binder are applied in the form of individual components by means of a coating gun.

5. A process according to one of claims 1-3, **characterised in that** the solder, fluxing agent and binder are applied in the form of a coextrudate in powder form by means of a coating gun, which coextrudate is formed by manufacture of a coextrusion product of the homogeneous mixture of solder, fluxing agent and binder, subsequent granulation of the coextrusion product to yield a granular material and grinding of the granular material to yield a coextrudate in powder form.

6. A process according to one of claims 1-3, **characterised in that** the solder, fluxing agent and binder are applied in the form of individual powder components in an electrostatic fluidised chamber/a fluidised bed.

7. A process according to one of claims 1-3, **characterised in that** the solder, fluxing agent and binder are applied in the form of a powder mixture in an electrostatic fluidised chamber/a fluidised bed.

8. A process according to one of claims 1-3, **characterised in that** the solder, fluxing agent and binder are applied in the form of a coextrudate in powder form in an electrostatic fluidised chamber/a fluidised bed, which coextrudate is formed by manufacture of a coextrusion product of the homogeneous mixture of solder, fluxing agent and binder, subsequent granulation of the coextrusion product to yield a granular material and grinding of the granular material to yield a coextrudate in powder form.

9. A process according to claim 1, **characterised in that** the solder, fluxing agent and binder are applied in the form of a coextrudate in powder form by means of a magnetic brush, which coextrudate is formed by manufacture of a coextrusion product of the homogeneous mixture of solder, fluxing agent and binder, subsequent granulation of the coextrusion product to yield a granular material and grinding of the granular material to yield a coextrudate in powder form.

10. A process according to claim 1, **characterised in that** the heat for melting the layer of solder, fluxing agent and binder which is to be applied is supplied to the component directly before powder coating is carried out.

11. A process according to claim 10, **characterised in that** the heat generated by the extrusion process in the component is used as the heat for melting the layer of solder, fluxing agent and binder which is to be applied onto the component in a coating operation that is carried out directly after the extrusion operation.

12. A process according to claim 1, **characterised in that** the heat for melting of the applied layer of solder, fluxing agent and binder is supplied to the component directly after power coating is carried out.

13. A process according to one of the preceding claims, **characterised in that** the melted layer of solder, fluxing agent and binder is subjected to a posttreatment for surface sealing and optionally smoothing of the layer with further supply of heat.

14. A process according to one of the preceding claims, **characterised in that** the coated component passes through a measuring station, the measured data from which are usable for controlling the powder application with respect to layer thickness, consistency and heat supply.

15. A process according to one of the preceding claims, **characterised in that** a cooling device is provided with which the coated components are cooled to a temperature suitable for further processing by cutting, straightening, coiling of the components or for storage thereof.

16. A process according to claim 1, **characterised in that** a small amount of binder powder is applied onto the component surface for brazing, in particular 3 to 10 g/m², preferably 4 g/m².

17. A reaction mixture for use in the process according to claim 1, comprising solder in powder form and fluxing agent in powder form, **characterised in that** the reaction mixture also comprises a binder in powder form and that the powder particles are 5 to 30 µm, preferably 10 to 15 µm, in size, wherein the powder particles are present in a narrow particle size distribution with an average of the distribution of 3 to 30 µm, preferably of 10 to 15 µm, and
wherein the proportion of binder relative to the total amount of powder is less than 35 wt.%, preferably 25 wt.%.

18. A reaction mixture according to claim 17, **characterised in that** the binder powder used is an organic binder.

19. A reaction mixture according to claim 17, **characterised in that** the fluxing agent used is a noncorrosive metal fluoride powder, in particular an alkali metal fluoride powder and/or zinc fluoride powder.

20. A reaction mixture according to claim 17, **characterised in that** the solder powder used is an aluminium-containing metal powder, such as Al-Si containing metal powder or alloy powder, preferably a supereutectic Al-Si(13-40) alloy powder.

21. A reaction mixture according to claim 17, **characterised in that** the solder powder used is a silicon powder.

22. A reaction mixture according to claim 17, **characterised in that** the solder powder used is a Zn powder.

23. A reaction mixture according to claim 17, **characterised in that** a weight ratio of solder powder to fluxing agent powder of 1:1 to 1:3, preferably of 1:1, is used.

24. A reaction mixture according to claim 17, **characterised in that**, in addition to the solder in powder form, fluxing agent in powder form and binder in powder form, functional additives for wear protection and/or corrosion protection in powder form are also used.

25. A reaction mixture for use in the process according to claim 1, **characterised in that** the reaction mixture comprises a coextrudate powder, which is obtained by grinding a granular coextrudate, which is obtained by extrusion of a mixture of solder, fluxing agent and binder, wherein the coextruded powder articles are present in particle sizes of 5 to 30 µm, preferably of 10 to 15 µm, and are present in a narrow particle size distribution with an average of the distribution of 3 to 30 µm, preferably of 10 to 15 µm, and
wherein the proportion of binder relative to the total amount of powder is less than 35 wt.%, preferably 25 wt.%.

## Revendications

1. Procédé pour revêtir partiellement ou complètement les surfaces de composants en aluminium et de ses alliages par une couche régulière de brasure, de flux fondant ou décapant et de liant homogènes, pour le brasage dur des composants entre eux,
dans lequel, à de hautes vitesses, on applique, sur les surfaces prévues pour la brasure, la brasure, le flux fondant ou décapant et le liant, sachant que la brasure et le flux fondant ou décapant sont appliqués sous forme pulvérulente, et
on utilise de la chaleur pour porter cette couche à fusion,
**caractérisé par le fait que**
pour de hautes vitesses, allant jusqu'à 180 m/min, sur les surfaces prévues pour la brasure, on applique la brasure, le flux fondant ou décapant et le liant, et le liant est appliqué sous forme pulvérulente, conjointement avec la brasure et le flux fondant ou décapant, par un revêtement en poudre électrostatique,
les particules de poudre se présentant sous une taille de particule de 5 à 30 µm, de préférence de 10 à 15 µm, ainsi que d'une étroite distribution de taille de particule avec une valeur moyenne de distribution de 10 à 15 µm,
la proportion de liant par rapport à la quantité globale de poudre est inférieure à 35 % en poids,
la couche régulière formée de brasure, de flux fondant ou décapant et de liant, répartis de façon homogène, présente une épaisseur de couche inférieure à 50 µm, de préférence de 15 µm.

2. Procédé selon la revendication 1, **caractérisé par le fait que** pour effectuer un revêtement en poudre électrostatique, on applique un procédé faisant utilisation de la capacité de charge triboélectrique des composants pulvérulents.

3. Procédé selon la revendication 1, **caractérisé par le fait que**, pour effectuer un revêtement en poudre électrostatique, on applique un procédé faisant utilisation de la charge corona faiblement ionique des composants pulvérulents.

4. Procédé selon l'une des . revendications 1 à 3, **caractérisé par le fait que** la brasure, le flux fondant ou décapant et le liant sont appliqués sous la forme de composants individuels à l'aide d'un pistolet.

5. Procédé selon l'une des revendications 1 à 3, **caractérisé par le fait que** la brasure, le flux fondant ou décapant et le liant sont appliqués au moyen d'un pistolet, sous la forme d'un co-extrudat pulvérulent, formé par fabrication d'un produit par co-extrusion à partir du mélange homogène de brasure, de flux fondant ou décapant et de liant, puis granulation du produit de co-extrusion pour former un granulat et broyage du granulat pour former un co-extrudat pulvérulent.

6. Procédé selon l'une des revendications 1 à 3, **caractérisé par le fait que** la brasure, le flux fondant ou décapant et le liant sont appliqués sous la forme de composants individuels pulvérulents, dans une chambre de tourbillonnement/un lit fluidisé électrostatique.

7. Procédé selon l'une des revendications 1 à 3, **caractérisé par le fait que** la brasure, le flux fondant ou décapant et le liant sont appliqués sous la forme d'une quantité de poudre, dans une chambre à tourbillonnement/un lit fluidisé électrostatique.

8. Procédé selon l'une des revendications 1 à 3, **caractérisé par le fait que** la brasure, le flux fondant ou décapant et le liant sont appliqués au moyen d'une chambre à tourbillonnement/un lit fluidisé électrostatique, sous la forme d'un co-extrudat pulvérulent, formé par fabrication d'un produit de co-extrusion à partir du mélange homogène de brasure, de flux fondant ou décapant et de liant, puis granulation du produit de co-extrusion pour former un granulat et broyage du granulat pour former un co-extrudat pulvérulent.

9. Procédé selon la revendication 1, **caractérisé par le fait que** la brasure, le flux fondant ou décapant et le liant sont appliqués au moyen d'une brosse magnétique, sous la forme d'un co-extrudat pulvérulent, formé par fabrication d'un produit de co-extrusion à partir du mélange homogène de brasure, de flux fondant ou décapant et de liant, puis granulation du produit de co-extrusion pour former un granulat et broyage du granulat pour former un co-extrudat pulvérulent.

10. Procédé selon la revendication 1, **caractérisé par le fait que** la chaleur est amenée aux composants pour porter à fusion la couche à appliquer formée de brasure, de flux fondant ou décapant et de liant, directement avant l'enduction par la poudre.

11. Procédé selon la revendication 10, **caractérisé en ce que** l'on utilise comme chaleur de mise en fusion de la couche à appliquer sur le composant, couche formée de brasure, de flux fondant ou décapant et de liant, la chaleur générée par le processus d'extrusion dans le composant, à l'occasion d'un processus d'application faisant directement suite au processus d'extrusion.

12. Procédé selon la revendication 1, **caractérisé par le fait que** la chaleur est amenée au composant pour obtenir la mise en fusion de la couche appliquée de brasure, de flux fondant ou décapant et de liant, directement après avoir procédé à l'enduction à la poudre.

13. Procédé selon l'une des revendications précédentes, **caractérisé par le fait que** la couche portée à fusion de brasure, flux fondant ou décapant et liant est soumise à un retraitement dans le but de sceller les surfaces et, le cas échéant, de lisser la couche avec apport supplémentaire de chaleur.

14. Procédé selon l'une des revendications précédentes, **caractérisé par le fait que** le composant revêtu passe par un poste de mesure dont les données déterminées sont utilisables pour la régulation de l'application de la poudre, quant à l'épaisseur de couche, la consistance et l'apport thermique.

15. Procédé selon l'une des revendications précédentes, **caractérisé par le fait que** l'on prévoit un dispositif de refroidissement, à l'aide duquel les composants revêtus sont refroidis à une température convenant pour le retraitement, par séparation, dressage, embobinage des composants ou pour leur stockage.

16. Procédé selon la revendication 1, **caractérisé par le fait que** l'on applique une faible quantité de poudre de liant pour le brasage dur sur la surface du composant, en une quantité, en particulier de 3 à 10 g/m², de préférence 4 g/m².

17. Mélange de réaction pour application dans le procédé selon la revendication 1, comprenant une brasure pulvérulente et un flux fondant ou décapant pulvérulent, **caractérisé par le fait que** le mélange de réaction comprend également un liant pulvérulent, et **par le fait que** les tailles de particules sont de 5 à 30 µm, de préférence de 10 à 15 µm, les particules se présentent sous une étroite distribution de tailles de particules avec une valeur moyenne de distribution de 3 à 30 µm, de préférence de 10 à 15 µm, et
la proportion de liant par rapport à la quantité globale de poudre est inférieure à 35 % en poids, de préférence 25 % en poids.

18. Mélange de réaction selon la revendication 17, **caractérisé par le fait que** l'on utilise comme poudre de liant un liant organique.

19. Mélange de réaction selon la revendication 17, **caractérisé par le fait que** l'on utilise comme flux fondant ou décapant une poudre de fluorure métallique non corrosive, en particulier une poudre de fluorure de métal alcalin et/ou une poudre de fluorure de zinc.

20. Mélange de réaction selon la revendication 17, **caractérisé par** la fait que l'on utilise comme poudre de brasage une poudre métallique contenant de l'aluminium, telle qu'une poudre métallique ou d'alliage contenant du Al-Si, de préférence une poudre d'alliage Al-Si(13-40) sur-eutectique.

21. Mélange de réaction selon la revendication 17,
**caractérisé par le fait que** l'on utilise comme poudre de brasage une poudre de Si.

22. Mélange de réaction selon la revendication 17, **caractérisé par le fait que** l'on utilise comme poudre de brasage une poudre de Zn.

23. Mélange de réaction selon la revendication 17, **caractérisé par le fait que** l'on utilise un rapport pondéral entre poudre de brasage et poudre d'agent fondant ou décapant de 1:1 à 1:3, de préférence 1:1.

24. Mélange de réaction selon la revendication 17, **caractérisé par le fait que**, en plus de la brasure se présentant sous forme pulvérulente, de l'agent fondant ou décapant se présentant sous la forme pulvérulente et du liant se présentant sous forme pulvérulente, on utilise encore des jeux fonctionnels pour obtenir une protection à l'usure et/ou une protection contre la corrosion, sous forme pulvérulente.

25. Mélange de réaction pour application dans le procédé selon la revendication 1, **caractérisé par le fait que** le mélange de réaction comprend une poudre de co-extrudat produite par broyage d'un granulat de co-extrudat, qui est obtenu par extrusion à partir d'un mélange de brasure, de flux fondant ou décapant et de liant, les particules de poudre de co-extrudat se présentant sous des tailles de particules de poudre de 5 à 30 µm, de préférence 10 à 15 µm, et en une étroite distribution de tailles de particules, avec une valeur moyenne de distribution de 3 à 30 µm, de préférence de 10 à 15 µm, et la proportion de liant, en se référant à la quantité globale de poudre, est inférieure à 35 % en poids, de préférence 25 % en poids.
